# FASCICULE DE BREVET EUROPEEN

(11) **EP 2 435 686 B1**
(45) Date de publication et mention de la délivrance du brevet: **17.04.2013**
(21) Numéro de dépôt: 10727471.4
(22) Date de dépôt: 07.05.2010
(51) Int. Cl.: F02K 9/97

(54) **Pièce de fixation entre la partie mobile d'un divergent déployable de propulseur et un mécanisme de déploiement de cette partie mobile**
Teil zur Zusammenfügung des beweglichen Teils einer einsetzbaren divergierenden Düse einer Antriebseinheit und Mechanismus für den Einsatz des beweglichen Teils
Part for attaching together the mobile portion of a deployable divergent nozzle of a propulsive unit and a mechanism for deploying said mobile portion

(30) Priorité: 27.05.2009 FR 0953485
(43) Date de publication de la demande: 04.04.2012
(73) Titulaire: Snecma, 75015 Paris (FR)
(72) Inventeur: FIOLEK, Michel, F-27190 Conches En Ouche (FR); STEPHANT, Romain, 13500 Martigues (FR); POMIES, Claude, 78200 Boissy Mauvoisin (FR); DAVID, Noël, F-27640 Breuilpont (FR)
(74) Mandataire: Intès, Didier Gérard André
(86) Numéro de dépôt international: PCT/FR2010/050878
(87) Numéro de publication internationale: WO 2010/136691

(56) Documents cités:
- EP-A1- 0 661 436
- EP-A1- 1 460 258
- WO-A2-2007/022771
- FR-A1- 2 916 018

## Description

La présente invention concerne une pièce de fixation entre la partie mobile d'un divergent déployable de propulseur et un mécanisme de déploiement de ladite partie mobile, la pièce de fixation comprenant une première zone de fixation destinée à être fixée à un élément du mécanisme de déploiement et une deuxième zone de fixation destinée à être fixée à la partie mobile.

Le divergent déployable est en particulier utilisé dans un moteur de fusée d'étage supérieur (par exemple deuxième ou troisième étage). Pour une telle application, il est nécessaire d'avoir une poussée très importante, cette poussée dépendant essentiellement du débit de gaz éjecté et de la vitesse d'éjection. Pour optimiser ces paramètres, il est nécessaire de disposer d'un divergent ayant un fort taux d'expansion, donc un fort diamètre de sortie. Il est donc nécessaire de disposer d'un divergent long, ce qui n'est pas compatible avec le faible encombrement à disposition, en particulier lorsque le divergent équipe le propulseur du deuxième ou du troisième étage d'une fusée.

Pour ce type d'applications, on utilise donc un divergent déployable, c'est-à-dire capable d'adopter une position rétractée, lui conférant une faible longueur, et pouvant être allongé par un déploiement d'une ou plusieurs parties mobiles, pour adopter sa configuration d'utilisation.

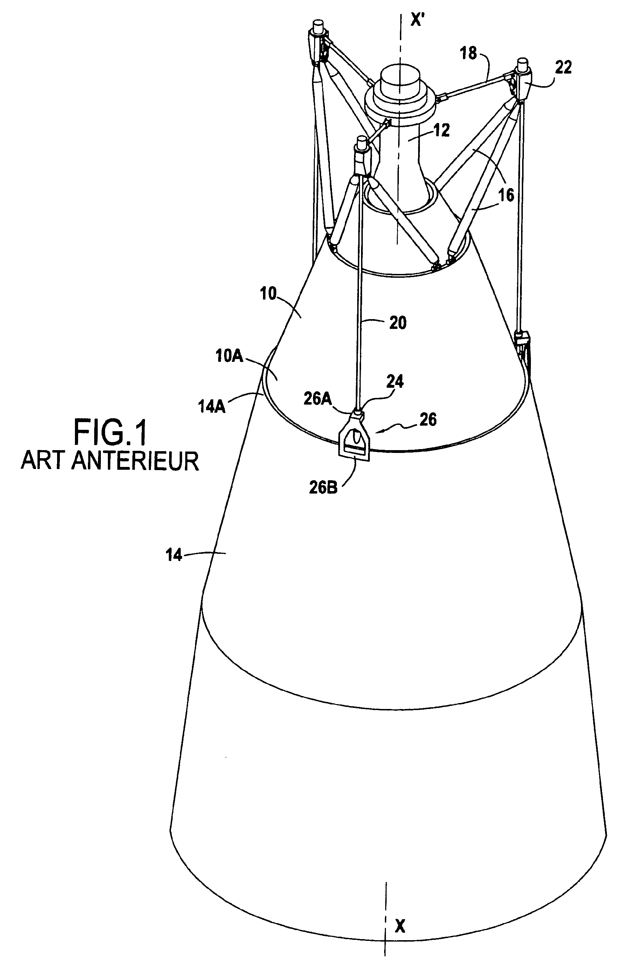

La figure 1 montre un divergent déployable de l'art antérieur, qui comprend une première partie 10 de divergent qui est fixe et qui est raccordée à un support fixe 12 du propulseur, une deuxième partie de divergent 14 qui est mobile selon la direction de déplacement X-X' qui correspond à celle de l'axe longitudinal du divergent. La figure 1 montre le divergent dans sa configuration déployée d'utilisation, le bord amont 14A de la partie 14 étant raccordé au bord aval 10A de la partie 10.

Comme indiqué précédemment, la partie fixe 10 du divergent est fixe par rapport au support 12. Le mécanisme de déploiement de la partie mobile 14 comprend dans l'exemple représenté une vis sans fin 20 qui, à son extrémité opposée à la partie mobile de divergent 14 est supportée par des bras 18 et 16, par l'intermédiaire d'une pièce de liaison 22, ces bras étant conformés en potence et eux-mêmes fixés sur le support fixe 12 à leurs extrémités opposées à la vis 20. Le mécanisme de déploiement comporte également un écrou 24 dans lequel est engagée cette vis sans fin, l'écrou 24 étant supporté par une pièce de fixation 26 fixée au bord amont 14A de la partie de divergent mobile 14. Dans l'exemple représenté, trois mécanismes de déplacement de ce type sont prévus.

On comprend que la pièce de fixation 26 comprend une première zone de fixation 26A à laquelle est fixé l'écrou 24 qui fait partie du mécanisme de déploiement, et une deuxième zone de fixation 26B qui est fixée à la partie de divergent mobile 14. Globalement, la pièce 26 a la forme d'un étrier, et sa deuxième zone de fixation 26B se présente sous la forme d'une barrette transversale, dirigée dans le sens circonférentiel de la partie de divergent 14. De manière connue, cette fixation peut être réalisée par un collage, et un vissage. La forme en "barrette transversale" de la deuxième partie de fixation 26B rigidifie la zone de fixation entre la pièce de fixation 26 et la partie de divergent mobile 14. Ceci pose une difficulté dans la mesure où le divergent, dans son ensemble, est soumis à des températures très élevées et à des vibrations très fortes. Dans la zone de fixation à chaque pièce 26, la deuxième partie de divergent 14 est donc rigidifiée sur la portion du pourtour de son bord amont correspondant à la longueur de la "barrette" 26B, de sorte que sa réponse aux diverses sollicitations qu'elle subit est hétérogène sur ce bord amont. En particulier, elle peut avoir tendance à se déformer en s'ovalisant sous l'effet combiné des hautes températures et des vibrations, alors que la "barrette" 26B de fixation ne suit pas cette ovalisation. Il en résulte des risques de rupture de la fixation, les moyens de fixation tels que de la colle ou des vis étant soumis à des efforts en traction particulièrement élevés, et des risques d'endommagement de la partie de divergent mobile 14.

Un divergent de l'art antérieur ayant les caractéristiques du préambule de la revendication 1 est décrit dans le document EP 0 661 436 A1.

L'invention vise à remédier à ces inconvénients, en proposant une pièce de fixation sensiblement exempte des inconvénients précités.

Ce but est atteint grâce au fait que la pièce de fixation comprend deux bras longitudinaux, qui s'étendent sensiblement parallèlement et dans le même sens à partir de la première zone de fixation et dont les extrémités libres opposées à la première zone de fixation sont dissociées et sont chacune pourvues d'une surface de fixation distincte, ces surfaces de fixation respectives formant ensemble la deuxième zone de fixation.

On comprend que la pièce de fixation de l'invention a globalement la forme d'un U, dont les extrémités des branches constituent les extrémités des bras de la pièce, fixées à la partie de divergent mobile. Ainsi, la "deuxième zone de fixation" est formée par les fixations respectives des deux bras de cette pièce à la partie de divergent mobile. Du fait de la forme en U de cette pièce, qui est dépourvue de voile de liaison entre ses bras, dans la région dans laquelle ces bras sont fixés à la partie de divergent mobile, les deux bras peuvent se déformer légèrement indépendamment l'un de l'autre. Ces débattements entre les deux bras leur permettent de suivre les déformations du bord amont de la partie de divergent mobile, sans soumettre la fixation aux efforts de traction importants précités. Les déformations du bord amont de la partie divergent mobile peuvent donc être plus beaucoup plus homogènes, et les risques de fatigue prématurée sont diminués. Bien entendu, les extrémités libres des bras de la pièce de fixation offrent des surfaces de fixation très localisées.

Avantageusement, les extrémités libres des bras présentent chacune une plaquette de fixation.

Chacune de ces plaquettes de fixation est fixée contre le bord amont de la partie de divergent mobile en offrant avant cette dernière un contact intime, tout en ayant une surface limitée.

Avantageusement, les plaquettes de fixation présentent des perçages pour des éléments de fixation tels que des vis.

Eventuellement, cette fixation par des éléments tels que des vis peut être complétée par un collage ou analogue.

Avantageusement, la pièce de fixation est réalisée dans un alliage à propriétés réfractaires tel qu'un alliage à base de molybdène-titane.

Il s'agit d'un matériau dont les inventeurs ont constaté qu'il présente une excellente tenue thermique permettant à cette pièce de fixation de conserver son intégrité aux très hautes températures de fonctionnement du propulseur.

L'invention concerne également un divergent déployable de propulseur comprenant :
- une première partie de divergent fixe apte à être raccordée à un support fixe du propulseur,
- une deuxième partie de divergent mobile selon une direction de déplacement entre une position rétractée et une position déployée, dans laquelle ladite deuxième partie se raccorde à l'extrémité aval de la première partie de divergent pour prolonger celle-ci,
- au moins un mécanisme de déploiement comprenant un premier élément fixé à la deuxième partie de divergent par une pièce de fixation, et un deuxième élément supporté par rapport au support fixe, lesdits premier et deuxième éléments coopérant entre eux de telle sorte que leur déplacement relatif provoque un déplacement de la deuxième partie de divergent.

Dans ce divergent déployable, la pièce de fixation est constituée conformément à l'invention, les deux bras de ladite pièce s'étendant sensiblement parallèlement à la direction de déplacement de la deuxième partie de divergent.

L'invention sera bien comprise et ses avantages apparaîtront mieux, à la lecture de la description détaillée qui suit, d'un mode de réalisation décrit en référence aux dessins annexés, sur lesquels :
- la figure 1 représente un divergent déployable avec des pièces de fixation selon l'art antérieur ;
- la figure 2 représente un divergent déployable équipé de pièces de fixation selon un exemple de réalisation de l'invention ;
- la figure 3 est une vue du même divergent que celui de la figure 2, en position rétractée ;
- la figure 4 est une vue en agrandissement de la zone IV de la figure 2 ;
- la figure 5 est une vue en perspective de la pièce de fixation visible sur la figure 2, prise selon la flèche V de cette figure ; et
- la figure 6 est une vue en perspective de la même pièce, prise par l'arrière de la figure 5.

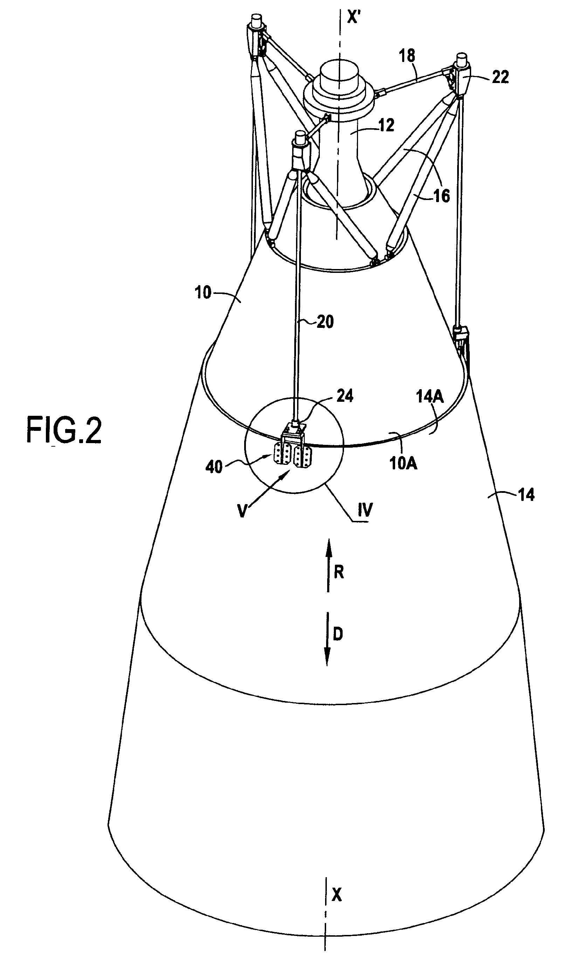

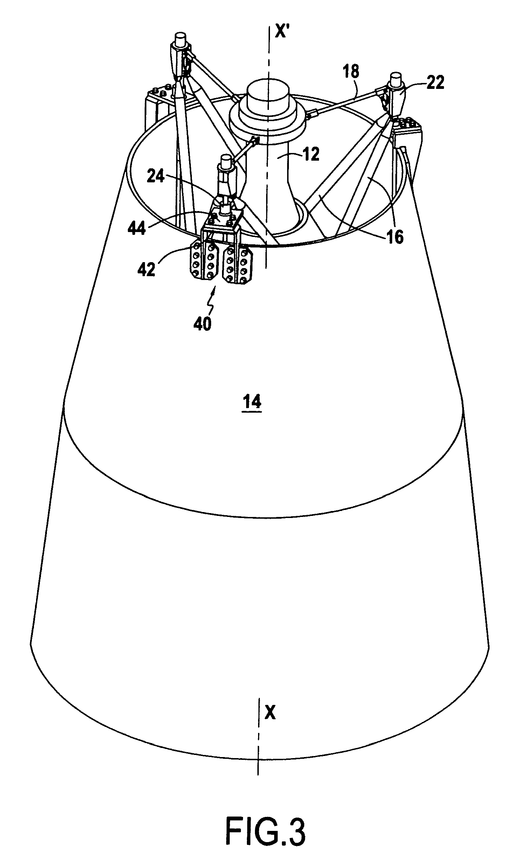

Sur les figures 2 et 3, les mêmes références numériques que sur la figure 1 sont utilisées pour décrire les éléments inchangés par rapport à cette figure. On reconnaît en particulier les deux parties de divergent, respectivement la partie fixe 10 et la partie mobile 14, le support fixe 12, et les bras 16, 18 reliant les pièces de liaison 22 à ce support fixe. On reconnaît les vis sans fin 20 reliées aux pièces de liaison 22, soutenues en potence par les bras 16 et 18. Ces vis 20 coopèrent avec des écrous 24 qui sont supportés par rapport à la partie de divergent mobile 14 par des pièces de fixation 40.

Pour déployer le divergent ou pour le replier, on fait tourner les vis 20, ce qui, les écrous 24 étant fixes par rapport aux pièces de fixation, ramène la partie de divergent 14 dans le sens R lorsque les vis sont entraînées dans le sens du vissage, ou déploie au contraire cette partie de divergent dans le sens D lorsque les vis sont entraînées en rotation dans le sens du dévissage. En l'espèce, chaque pièce de fixation est associée à un mécanisme de déploiement comprenant une vis 20 supportée par rapport à la partie fixe du convergent, et un écrou 24 supporté, par l'intermédiaire d'une pièce de fixation 40, par la partie de divergent mobile 14.

En se reportant aux figures 2 à 6, on voit que la pièce de fixation 40 selon l'invention comprend une première zone de fixation 42 qui est destinée à être fixée à un élément du mécanisme de déploiement. En l'espèce, cet élément est l'écrou 24, qui est supporté par rapport à la première zone de fixation 42 de la pièce 40 par une plaquette d'interface 44.

On voit également que la pièce de fixation 40 comprend deux bras longitudinaux, respectivement 46A et 46B, qui s'étendent sensiblement parallèlement entre eux et dans le même sens à partir de la première zone de fixation 42. En d'autres termes, la pièce 40 présente une forme générale en U, la première zone de fixation formant un pont entre ses deux bras longitudinaux. On voit que les extrémités libres 46'A et 46'B de ces bras 46A et 46B qui sont opposées à la première zone de fixation 42 sont dissociées. Ceci signifie qu'il s'agit réellement d'extrémités libres, non reliées entre elles par un élément susceptible de les empêcher de fléchir légèrement l'une par rapport à l'autre. En particulier, on voit qu'il n'existe aucun voile de liaison ou analogue entre les deux extrémités libres des bras 46A et 46B, ces bras étant seulement reliés, au niveau de leurs extrémités opposées à leurs extrémités libres, par la partie 42 qui forme le pont du U.

On voit que les extrémités libres 46'A et 46'B des bras 46A et 46B portent des plaquettes de fixation, respectivement 48A et 48B.

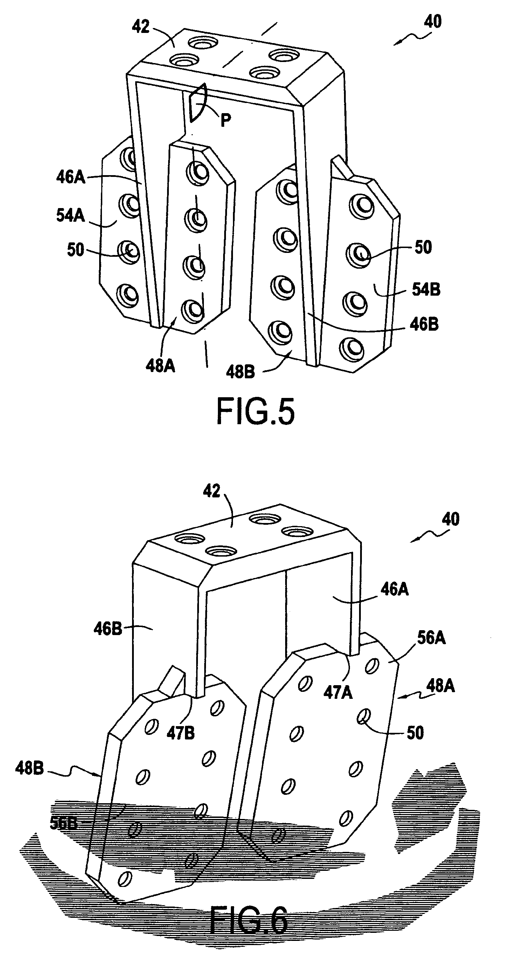

Ces plaquettes de fixation présentent des perçages 50 (voir figures 5 et 6) pour des éléments de fixation tels que des vis 52.

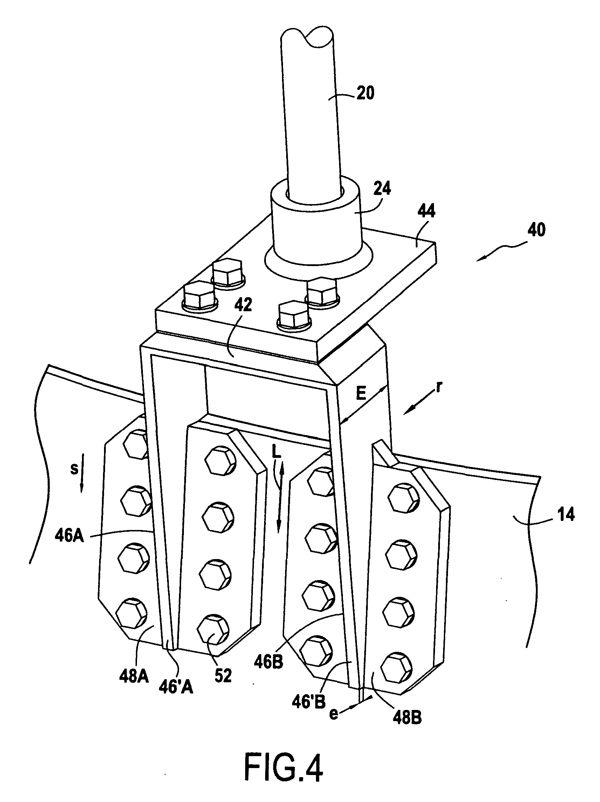

Chaque plaquette présente une face extérieure respectivement 54A et 54B et une face intérieure, respectivement 56A et 56B. La face intérieure est celle qui, lorsque la plaquette est fixée sur la deuxième partie 14 de divergent, se trouve vers l'intérieur de ce divergent. La face extérieure est bien entendu la face opposée. Sur la figure 6, on voit que la face intérieure de chaque plaquette est en décrochement par apport au bras, respectivement 46A ou 46B, qui la porte. Ces décrochements, respectivement 47A et 47B, forment des butées qui, comme on le voit sur la figure 4, permettent de caler la position longitudinale de la pièce de fixation 40 par rapport à la deuxième partie 14 de divergent, lorsque cette pièce est montée sur cette deuxième partie.

Par ailleurs, les faces intérieures 56A et 56B des plaquettes sont dépourvues de relief, pour venir se plaquer contre la face externe de la deuxième partie 14 de divergent.

En revanche, sur la face extérieure 54A, 54B de chaque plaquette, le bras, respectivement 46A et 46B, qui porte la plaquette est en saillie. On voit, en particulier sur les figures 4 et 5, que les bras forment en fait des nervures sur les faces extérieures des plaquettes.

Les bras se comportent comme des raidisseurs, qui ont la tenue mécanique suffisante. Toutefois, on constate que leurs épaisseurs, mesurées dans la direction radiale r perpendiculaire à la direction longitudinale L des pièces de fixation (laquelle est parallèle à l'axe du divergent), vont en décroissant dans le sens S allant en se rapprochant des extrémités libres 46'A et 46'B. On constate en effet que, la proximité de la première zone de fixation 42, l'épaisseur E d'un bras est très supérieure à l'épaisseur e de ce bras à son extrémité libre, laquelle épaisseur e est en fait pratiquement nulle, l'épaisseur du bras se confondant pratiquement avec celle de la plaquette qu'il porte.

Ainsi, les bras se comportent comme des raidisseurs, dont l'effet de raidissement va en diminuant vers leurs extrémités libres. Il en résulte que les plaquettes 48A et 48B sont à la fois parfaitement supportées par rapport à la partie 42 de la pièce de fixation, mais qu'elles peuvent être animées de légers débattements, en particulier dans le sens radial r pour permettre aux surfaces de fixation de ces plaquettes d'accompagner les éventuelles déformations de la partie de divergent mobile 14 en particulier dans le sens radial r.

La pièce de fixation 40 présente une symétrie par rapport à un plan radial P passant par la section transversale médiane de la première zone de fixation 42. Ce plan est défini par le segment transversal médian de la zone 42 et la direction longitudinale de la pièce de fixation.

On voit également que les plaquettes 48A et 48B s'étendent chacune de part et d'autre de la nervure formée par l'un des bras 46A et 46B, et que chaque plaquette présente des perçages 50 pour une vis sur chacune de ces deux moitiés, respectivement situées de part et d'autre de la nervure précitée. Ainsi, chaque bras est parfaitement solidarisé avec la deuxième partie de divergent 14, sans risque de décollement par rapport à cette dernière.

De manière générale, il est avantageux que, pour chaque bras, la plaquette solidaire de ce bras s'étende de part et d'autre de la nervure formée par ce bras. Il est même souhaitable que cette plaquette puisse être solidarisée à la deuxième partie de divergent par des fixations s'étendant de part et d'autre de la nervure précitée. Dans l'exemple représenté, à chacun des trous 50 situés d'un côté de la nervure correspond un autre trou situé dans un même plan perpendiculaire à la direction longitudinale de la plaquette. On pourrait prévoir que les trous soient disposés autrement, par exemple en quinconce.

Dans l'exemple représenté, le divergent déployable des figures 2 et 3 comporte trois mécanismes de déplacement, c'est-à-dire trois ensembles de vis 20 et d'écrous 24 associés chacun à une pièce de fixation. Ces mécanismes sont répartis angulairement de manière régulière, en formant entre eux des angles de 120°. Bien entendu, on pourrait prévoir un nombre différent de mécanismes, par exemple quatre de préférence également répartis régulièrement.

## Revendications

1. Pièce de fixation (40) entre la partie mobile (14) d'un divergent déployable de propulseur et un mécanisme de déploiement (20, 22, 24) de ladite partie mobile, la pièce de fixation comprenant une première zone de fixation (42) destinée à être fixée à un élément (24) du mécanisme de déploiement et une deuxième zone de fixation (48A, 48B) destinée à être fixée à la partie mobile,
**caractérisée en ce que** la pièce de fixation (40) comprend deux bras longitudinaux (46A, 46B), qui s'étendent sensiblement parallèlement et dans le même sens à partir de la première zone de fixation (42) et dont les extrémités libres opposées à la première zone de fixation sont dissociées et sont chacune pourvues d'une surface de fixation distincte (48A, 48B), ces surfaces de fixation respectives formant ensemble la deuxième zone de fixation.

2. Pièce de fixation selon la revendication 1, **caractérisé en ce que** les extrémités libres des bras (46A, 46B) présentent chacune une plaquette de fixation (48A, 48B).

3. Pièce de fixation selon la revendication 2, **caractérisée en ce que** les plaquettes de fixation (48A, 48B) présentent des perçages (50) pour des éléments de fixation tels que des vis (52).

4. Pièce de fixation selon la revendication 2 ou 3, **caractérisée en ce que** chaque plaquette (48A, 48B) présente une face extérieure (54A, 54B) sur laquelle le bras (46A, 46B) qui porte la plaquette est en saillie, et une face intérieure (56A, 56B) dépourvue de relief.

5. Pièce de fixation selon la revendication 4, **caractérisée en ce que** la face intérieure (56A, 56B) de la plaquette (48A, 48B) est en décrochement (47A, 47B) par rapport au bras (46A, 46B) qui la porte.

6. Pièce de fixation selon l'une quelconque des revendications 1 à 5, **caractérisée en ce que** les bras (46A, 46B) forment des nervures.

7. Pièce de fixation selon la revendication 6, **caractérisée en ce que** l'épaisseur (E, e) des bras (46A, 46B) va en décroissant dans le sens (S) allant en se rapprochant des extrémités libres.

8. Pièce de fixation selon la revendication 6 ou 7, **caractérisée en ce que** pour chaque bras (46A, 46B), la plaquette (48A, 48B) s'étend de part et d'autre de la nervure formée par ce bras.

9. Pièce de fixation selon l'une quelconque des revendications 1 à 8, **caractérisée en ce qu'**elle est réalisée dans un alliage à propriétés réfractaires tel qu'un alliage à base de molybdène-titane.

10. Divergent déployable de propulseur comprenant :
- une première partie de divergent (10) fixe apte à être raccordée à un support fixe (12) du propulseur,
- une deuxième partie de divergent (14) mobile selon une direction (R, D) de déplacement entre une position rétractée et une position déployée, dans laquelle ladite deuxième partie (14) se raccorde à l'extrémité aval (10A) de la première partie de divergent (10) pour prolonger celle-ci,
- au moins un mécanisme de déploiement (20, 22, 24) comprenant un premier élément (24) fixé à la deuxième partie de divergent (14) par une pièce de fixation (40), et un deuxième élément (20) supporté par rapport au support fixe, lesdits premier et deuxième éléments coopérant entre eux de telle sorte que leur déplacement relatif provoque un déplacement de la deuxième partie (14) de divergent,
**caractérisé en ce que** la pièce de fixation (40) est constituée selon l'une quelconque des revendications 1 à 8, les deux bras (46A, 46B) de ladite pièce s'étendant sensiblement parallèlement à la direction de déplacement (R, D) de la deuxième partie de divergent (14).

## Claims

1. A fastener fitting (40) between the movable portion (14) of a deployable diverging bell of a thruster and a deployment mechanism (20, 22, 24) for deploying said movable portion, the fastener fitting having a first fastener zone (42) for fastening to an element (24) of the deployment mechanism and a second fastener zone (48A, 48B) for fastening to the movable portion, the fastener fitting (40) being **characterized in that** it has two longitudinal arms (46A, 46B) that extend substantially in parallel and in the same direction from the first fastener zone (42), having free ends remote from the first fastener zone that are separate, each arm being provided with a distinct fastener surface (48A, 48B), the respective fastener surfaces together forming the second fastener zone.

2. A fastener fitting according to claim 1, **characterized in that** the free ends of the arms (46A, 46B) present respective fastener plates (48A, 48B).

3. A fastener fitting according to claim 2, **characterized in that** the fastener plates (48A, 48B) present holes (50) for fastener elements such as screws (52).

4. A fastener fitting according to claim 2 or claim 3, **characterized in that** each plate (48A, 48B) presents an outer face (54A, 54B) from which the arm (46A, 46B) carrying the plate projects, and an inner face (56A, 56B) having no portion in relief.

5. A fastener fitting according to claim 4, **characterized in that** the inner face (56A, 56B) of the plate (48A, 48B) is set back (47A, 47B) relative to the arm (46A, 46B) carrying it.

6. A fastener fitting according to any one of claims 1 to 5, **characterized in that** the arms (46A, 46B) form ribs.

7. A fastener fitting according to claim 6, **characterized in that** the thickness (E, e) of the arms (46A, 46B) tapers in the direction (S) going towards the free ends.

8. A fastener fitting according to claim 6 or claim 7, **characterized in that** for each arm (46A, 46B) the plate (48A, 48B) extends on either side of the rib formed by the arm.

9. A fastener fitting according to any one of claims 1 to 8, **characterized in that** it is made of an alloy having refractory properties, such as an alloy based on titanium-molybdenum.

10. A deployable diverging bell for a thruster, the bell comprising:
· a stationary first portion (10) of the diverging bell that is suitable for being attached to a stationary support (12) of the thruster;
· a second portion (14) of the diverging bell that is movable in a travel direction (R, D) between a retracted position and a deployed position, in which said second portion (14) connects to the downstream end (10A) of the first portion (10) of the diverging bell in order to extend it; and
· at least one deployment mechanism (20, 22, 24) comprising a first element (24) fastened to the second portion (14) of the diverging bell via a fastener fitting (40), and a second element (20) supported relative to the stationary support, said first and second elements cooperating together so that relative movement between them causes the second portion (14) of the diverging bell to move;
the diverging bell being **characterized in that** the fastener fitting (40) is a fitting according to any one of claims 1 to 8, the two arms (46A, 46B) of said fitting extending substantially parallel to the travel direction (R, D) of the second portion (14) of the diverging bell.

## Patentansprüche

1. Befestigungsteil (40) zwischen dem beweglichen Teil (14) eines ausfahrbaren divergenten Düsenteils eines Triebwerks und einem Ausfahrmechanismus (20, 22, 24) des beweglichen Teils, wobei das Befestigungsteil einen ersten Befestigungsbereich (42), der dazu bestimmt ist, an einem Element (24) des Ausfahrmechanismus befestigt zu werden, sowie einen zweiten Befestigungsbereich (48A, 48B), welcher dazu bestimmt ist, an dem beweglichen Teil befestigt zu werden, umfaßt,
**dadurch gekennzeichnet, daß** das Befestigungsteil (40) zwei Längsarme (46A, 46B) umfaßt, die sich von dem ersten Befestigungsbereich (42) ausgehend im wesentlichen parallel und in die gleiche Richtung erstrecken und deren von dem ersten Befestigungsbereich abgewandte freie Enden getrennt sind und jeweils mit einer separaten Befestigungsfläche (48A, 48B) versehen sind, wobei diese jeweiligen Befestigungsflächen zusammen den zweiten Befestigungsbereich bilden.

2. Befestigungsteil nach Anspruch 1, **dadurch gekennzeichnet, daß** die freien Enden der Arme (46A, 46B) jeweils eine Befestigungsplatte (48A, 48B) aufweisen.

3. Befestigungsteil nach Anspruch 2, **dadurch gekennzeichnet, daß** die Befestigungsplatten (48A, 48B) Bohrungen (50) für Befestigungselemente, wie Schrauben (52), aufweisen.

4. Befestigungsteil nach Anspruch 2 oder 3, **dadurch gekennzeichnet, daß** jede Platte (48A, 48B) eine Außenseite (54A, 54B), an der der Arm (46A, 46B), der die Platte trägt, vorspringt, sowie eine relieffreie Innenseite (56A, 56B) aufweist.

5. Befestigungsteil nach Anspruch 4, **dadurch gekennzeichnet, daß** die Innenseite (56A, 56B) der Platte (48A, 48B) gegenüber dem Arm (46A, 46B), der sie trägt, abgesetzt ist (47A, 47B).

6. Befestigungsteil nach einem der Ansprüche 1 bis 5, **dadurch gekennzeichnet, daß** die Arme (46A, 46B) Rippen bilden.

7. Befestigungsteil nach Anspruch 6, **dadurch gekennzeichnet, daß** die Dicke (E, e) der Arme (46A, 46B) in der sich den freien Enden nähernden Richtung (S) abnehmend ist.

8. Befestigungsteil nach Anspruch 6 oder 7, **dadurch gekennzeichnet, daß** sich bei jedem Arm (46A, 46B) die Platte (48A, 48B) auf beiden Seiten der durch diesen Arm gebildeten Rippe erstreckt.

9. Befestigungsteil nach einem der Ansprüche 1 bis 8, **dadurch gekennzeichnet, daß** es aus einer Legierung mit feuerfesten Eigenschaften, wie einer Legierung auf Molybdän/Titan-Basis ausgebildet ist.

10. Ausfahrbarer divergenter Düsenteil eines Triebwerks, umfassend:
- ein erstes festes Teil (10) des divergenten Düsenteils, das geeignet ist, mit einem festen Träger (12) des Triebwerks verbunden zu werden,
- ein zweites Teil (14) des divergenten Düsenteils, das in einer Bewegungsrichtung (R, D) zwischen einer eingefahrenen Position und einer ausgefahrenen Position, in der das zweite Teil (14) an das stromabwärtige Ende (10A) des ersten Teils (10) des divergenten Düsenteils anschließt, um dieses zu verlängern, beweglich ist,
- wenigstens einen Ausfahrmechanismus (20, 22, 24), der ein erstes Element (24), das durch ein Befestigungsteil (40) an dem zweiten Teil (14) des divergenten Düsenteils befestigt ist, sowie ein zweites Element (20), das gegenüber dem festen Träger gehalten ist, umfaßt, wobei das erste und das zweite Element derart zusammenwirken, daß ihre Relativbewegung eine Bewegung des zweiten Teils (14) des divergenten Düsenteils bewirkt,
**dadurch gekennzeichnet, daß** das Befestigungsteil (40) nach einem der Ansprüche 1 bis 8 ausgebildet ist, wobei die beiden Arme (46A, 46B) des Teils sich im wesentlichen parallel zu der Bewegungsrichtung (R, D) des zweiten Teils (14) des divergenten Düsenteils erstrecken.
